# FASCICULE DE BREVET EUROPEEN

(11) **EP 1 229 204 B1**
(45) Date de publication et mention de la délivrance du brevet: **14.09.2005**
(21) Numéro de dépôt: 02360046.3
(22) Date de dépôt: 29.01.2002
(51) Int. Cl.: E05G 7/00

(54) **Trappon d'accès pour transport de fonds**
Mit einer Luke verschlossener Zugang zum Transport von Wertgegenständen
Access closed by a trap door for transporting valuables

(30) Priorité: 02.02.2001 FR 0101428
(43) Date de publication de la demande: 07.08.2002
(73) Titulaire: Ritzenthaler (Société Anonyme), 78140 Velizy-Villacoublay (FR)
(72) Inventeur: Mathieu, Alphonse, 67600 Hilsenheim (FR)
(74) Mandataire: Nuss, Pierre

(56) Documents cités:
- WO-A-94/20719
- BE-A- 1 011 526

## Description

La présente invention concerne le domaine des équipements bancaires, en particulier des accès spécifiques aux transports de fonds et notamment des trappons d'accès, et a pour objet un tel trappon d'accès pour transport de fonds, voir par exemple BE 1 011 526 A.

La livraison des fonds nécessaires au fonctionnement normal des guichets et des agences bancaires est réalisée par l'intermédiaire de sociétés spécialisées de transport de fonds effectuant ledit transport au moyen de véhicules spécifiques blindés pourvus d'une partie formant coffre logeant un ou deux convoyeurs de fonds réalisant le transfert entre le véhicule et l'agence ou le guichet, généralement sous la protection d'un autre agent.

Les livraisons ainsi effectuées ont cependant fait l'objet, récemment, de nombreuses attaques du personnel de convoyage, en particulier pendant les opérations de transfert entre le véhicule et l'agence ou le guichet, ledit personnel évoluant alors totalement à découvert, parfois sur une distance relativement importante. Il est alors relativement facile à des agresseurs d'attaquer ledit personnel avec d'importants risques pour ce dernier de blessures, voire de coups mortels.

Dans des cas particuliers de disposition d'immeubles bancaires ou d'autres locaux ayant des flux importants de numéraires, il a été prévu d'aménager des sas d'accès spécifiques permettant l'entrée de l'ensemble du véhicule de convoyage et l'enfermement de celui-ci pendant les opérations de transfert de fonds. Cependant, une telle prévision de sas pouvant entièrement être fermée n'est envisageable que si des espaces suffisamment importants sont disponibles auprès de ces immeubles ou locaux. Tel peut notamment être le cas pour des magasins à grande surface dont les services financiers peuvent être prolongés par un bâtiment spécifique.

Dans les cas les plus usuels d'une disposition des bâtiments en milieu urbain avec accès uniquement par une façade, la législation a prévu la nécessité pour les organismes bancaires ou financiers de disposer d'accès spécifiques protégés, dénommés trappons d'accès, qui sont destinés à permettre un accostage latéral du véhicule de transport de fond en façade d'un immeuble desservi.

Ainsi, il a été proposé de modifier des façades en les pourvoyant soit d'un tunnel d'accès réalisé en dur et en saillie sur ladite façade, soit d'un tunnel télescopique escamotable en position de repos, dans ladite façade.

Dans le premier cas, il se pose, cependant, un problème d'empiétement d'une construction en dur, le cas échéant, sur une partie de voie publique, ce qui est particulièrement gênant pour les utilisateurs de cette dernière. Dans le deuxième cas, il n'existe pas de gêne pour l'utilisateur de la voie publique, mais il se pose le problème du guidage et de l'implantation de la partie télescopique rétractée à l'intérieur du bâtiment ainsi équipé. En effet, un tel dispositif escamotable nécessite un espace relativement important pour son logement en position rétractée, ce qui est rédhibitoire pour un aménagement optimal du local desservi par le tunnel.

La présente invention a pour but de pallier ces inconvénients en proposant un trappon d'accès pour transport de fonds permettant une sécurisation maximale de l'espace entre le véhicule et le local de déchargement des fonds tout en étant d'un encombrement minimal et en ne présentant aucune gêne à l'intérieur du local desservi.

A cet effet, le trappon d'accès pour transfert de fonds est caractérisé en ce qu'il est essentiellement constitué par un moyen escamotable s'appuyant, en position de service, contre le véhicule de transport de fonds et, en position de repos, contre la façade de l'immeuble renfermant le local à desservir, de part et d'autre de la porte d'accès à ce local ou devant ladite porte.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation frontale d'un trappon d'accès conforme à l'invention en position de repos ;
la figure 2 est une vue en plan et en coupe du trappon suivant la figure 1 ;
la figure 3 est une vue analogue à celle de la figure 2 du trappon en position d'ouverture maximale ;
la figure 4 est une vue analogue à celle de la figure 3 représentant le trappon pendant une opération de transfert de fonds ;
la figure 5 représente, dans une vue analogue à celle des figures 2 à 4, le trappon dans une position de maintenance ;
la figure 6 est une vue en plan et en coupe d'une variante de réalisation du trappon suivant la figure 1 ;
les figures 7 et 8 sont des vues analogues, respectivement à celles des figures 6 et 4 d'une autre variante de réalisation de l'invention ;
la figure 9 est une vue partielle en élévation représentant le moyen de déploiement et de repliement d'un volet repliable, et
la figure 10 est une vue partielle en plan et en coupe représentant, par transparence, un volet repliable dans différentes positions de repliement et de déploiement.

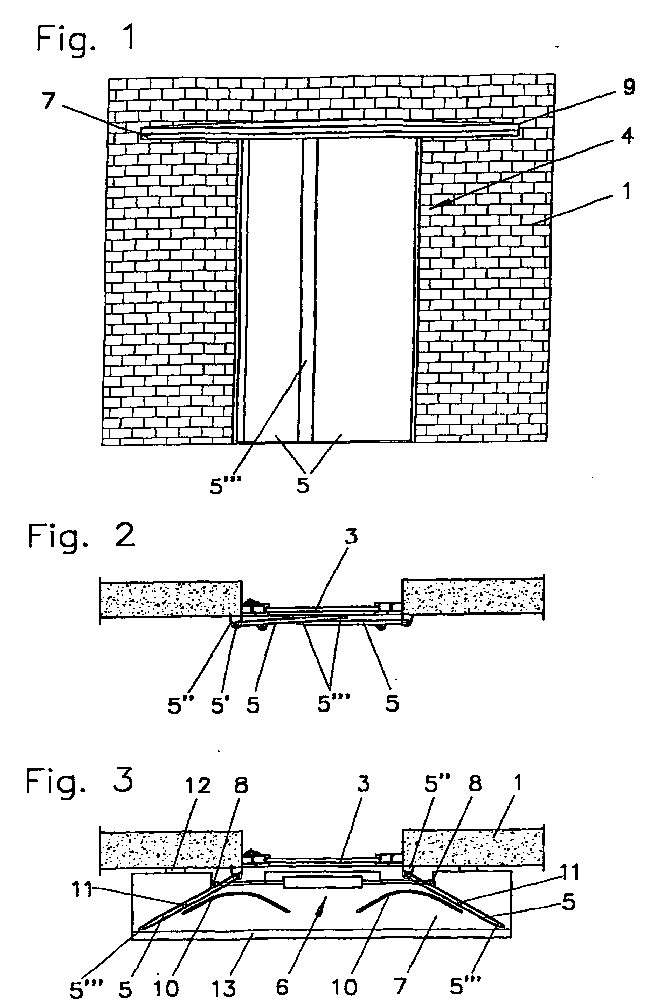

Les figures 1 à 8 des dessins annexés représentent un trappon d'accès pour transfert de fonds équipant une façade 1 d'un immeuble et destiné à permettre la protection de convoyeurs de fonds pendant le transfert de valeurs entre un véhicule 2 et le local de dépôt desdites valeurs, en particulier la porte 3 d'accès à ce local.

Conformément à l'invention et comme le montrent les figures 1 à 8 des dessins annexés, le trappon d'accès est essentiellement constitué par un moyen escamotable 4 s'appuyant, en position de service, contre le véhicule de transport de fonds 2 et, en position de repos, contre la façade 1 de l'immeuble renfermant le local à desservir, de part et d'autre de la porte 3 d'accès à ce local ou devant ladite porte 3.

Le moyen escamotable 4 est constitué, selon un premier mode de réalisation de l'invention, représenté aux figures 1 à 5 des dessins annexés, par deux volets 5 articulés sur l'encadrement de la porte 3 d'accès au local de dépôt des valeurs, du côté extérieur de celui-ci, et rabattus, en position de repos, devant la porte 3 d'accès au local de dépôt des valeurs, par un moyen d'actionnement 6 relié à articulation aux volets 5 et par un moyen 7 de recouvrement des volets 5 en toutes positions. Un tel mode de réalisation permet d'assurer simultanément, en position de repos des volets 5, une protection suplémentaire contre l'effraction au niveau de la porte 3.

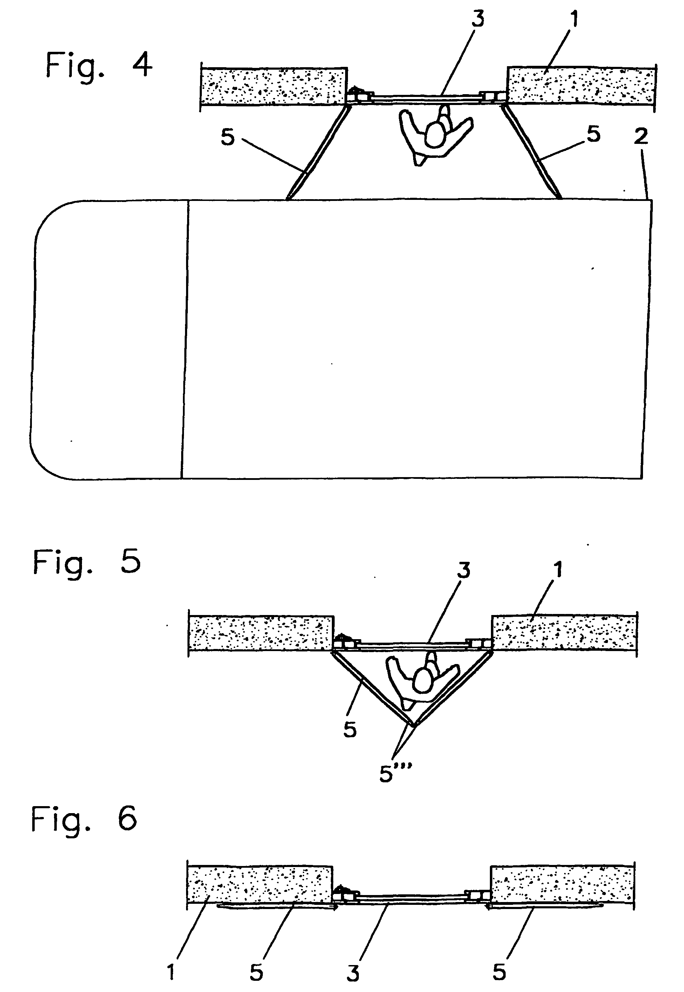

La figure 6 des dessins annexés représente une variante de réalisation de l'invention, dans laquelle les volets 5 constituant le moyen escamotable 4 sont rabattus, en position de repos, de part et d'autre de la porte 3, contre la façade 1.

Les volets 5 se présentent avantageusement sous forme de deux plaques pleines pourvues, d'une part, de paumelles 5' d'articulation sur un cadre dormant 5" fixé à l'encadrement de la porte 3 d'accès au local de dépôt de valeurs et, d'autre part, du côté opposé aux paumelles 5' d'un joint élastiquement déformable 5"' d'application contre la paroi du véhicule de transport de fond 2. Ces volets 5 peuvent, en outre, être munis d'un blindage anti-effraction et pare-balles.

Le moyen d'actionnement 6, relié à articulation aux volets 5 se présente, de préférence, sous forme d'au moins un vérin électrique, pneumatique ou hydraulique relié, respectivement par sa chape et par l'extrémité libre de sa tige de piston, avec possibilité de pivotement relatif, à des axes d'entraînement correspondants 8 solidaires de la partie supérieure de chaque plaque pleine formant les volets 5.

Dans le cas d'une réalisation du moyen d'actionnement 6 sous forme de deux vérins, ces derniers sont reliés chacun à articulation, par leur chape à la façade 1 ou au cadre dormant 5" et par leur tige de piston à l'axe d'entraînement 8 du volet 5 correspondant. Ainsi, par actionnement du ou des vérins formant le moyen 6, les volets 5 sont pivotés autour de l'axe de leurs paumelles 5' et peuvent être manoeuvrés, soit dans le sens d'une ouverture lorsqu'ils sont repliés en position de repos devant la porte 3 (figures 2 et 3), soit dans le sens d'un déplacement en direction de la paroi d'un véhicule de transport de fonds 2 (figure 4) ou pour la création d'un sas provisoire d'accès (figure 5).

La position des volets repliés au repos devant la porte 3, représentée aux figures 1 et 2 des dessins annexés, correspond simplement à un rabattement de l'un des volets 5 sur l'autre volet 5, lors de la fermeture de l'accès à la porte 3. Dans un tel cas, la commande du ou des vérins formant le moyen d'actionnement 6 s'effectue, de manière connue, de telle façon que l'un des volets 5 est toujours prioritaire à la fermeture, alors que l'autre volet est toujours prioritaire à l'ouverture. Une commande de fermeture et d'ouverture prioritaire alternative est de type parfaitement connu par l'homme du métier, notamment dans la fermeture de portails ou autres au moyen de deux vérins distincts. Dans le cas d'utilisation d'un vérin unique, tel que prévu à la figure 3 des dessins annexés, il conviendra de prévoir un automatisme de définition des priorités à l'ouverture et à la fermeture, par exemple sous la forme de sélecteurs de fermeture. De tels sélecteurs de fermeture consistent, en fait, en des butées retenant alternativement l'un ou l'autre volet dans des positions prédéterminées pendant le mouvement d'actionnement commun et en des détecteurs de position de l'autre volet permettant la libération des butées en vue d'un déplacement commun, après atteinte de certaines positions prédéterminées. Ces dispositifs sont connus dans le domaine de l'actionnement en pivotement de moyens de fermeture tels que des portails, notamment à vantaux à recouvrement ou analogues et ne nécessitent pas de description complémentaire.

Le moyen 7 de recouvrement des volets 5 en position de service est constitué par un panneau coulissant logé dans un support de protection 9 fixé à la façade 1, au-dessus de la porte 3 et renfermant le moyen d'actionnement 6 des volets 5. Ce moyen de recouvrement 7 est pourvu, d'une part, sur sa face tournée vers la partie supérieure des volets 5, de cames 10 destinées à coopérer avec des axes de guidage 11 prévus auxdites extrémités supérieures des volets 5, d'autre part, à son bord arrière tourné vers la façade 1 d'un dispositif 12 de rappel en position de repos contre la façade 1 et, enfin, sur son bord avant d'un joint élastiquement déformable 13 (figure 3). Les cames 10 sont destinées, par coopération avec les axes de guidage 11 des volets 5, à favoriser un mouvement synchrone desdits volets 5 pendant leur déplacement en direction de la paroi du véhicule de transport de fonds 2, ainsi qu'un mouvement simultané de déplacement du moyen de recouvrement 7 dans la même direction. En outre, dans le cas d'un actionnement de volets 5 à partir d'une position de repos, dans laquelle ils sont appliqués contre la façade 1, les cames 10 forment un obstacle au déplacement desdits volets 5, lorsque l'axe de guidage 11 de ces derniers vient au contact desdites cames 10. Il en résulte que le premier contact entre une came 10 et un axe 11 aura un effet de butée sur le vérin formant le moyen d'actionnement 6, de sorte que le déplacement consécutif de rétraction du vérin aura pour conséquence un pivotement de l'autre volet jusqu'au contact de l'axe 11 de celui-ci avec la came 10 correspondante. Dès que les deux contacts seront établis, le vérin poursuivra son déplacement de rétraction et par coopération entre les cames et les axes de guidage 11, le moyen de recouvrement 7 sera déplacé en direction opposée à la façade 1, de sorte que l'ensemble de la partie avant des volets 5 est continuellement recouvert par le moyen de recouvrement 7.

Le support de protection 9 fixé à la façade 1 est préférentiellement constitué par une tôle montée en saillie au-dessus de la porte 3 et comportant des guidages latéraux (non représentés) de maintien du moyen de recouvrement 7 et de protection de l'espace libre entre ce dernier et la façade 1, en position de service dudit moyen de recouvrement 7.

Le moyen 12 de rappel en position de repos du moyen de recouvrement 7 contre la façade 1 peut être constitué, soit sous la forme d'au moins un moyen élastique de rappel tel qu'un ressort ou une matière élastiquement déformable du type caoutchouc, soit sous forme d'au moins un dispositif à piston tel qu'un amortisseur ou un vérin.

Dans le cas de réalisation du moyen 12 sous la forme d'au moins un vérin, celui-ci peut être du type à simple effet, chargé dans le sens d'un rappel en position de repos du moyen de recouvrement 7, lors de la délivrance d'une commande de retour en position de repos des volets 5. Il est également possible de réaliser le moyen 12 sous la forme d'au moins un vérin double-effet commandé en synchronisme avec le ou les vérins formant le moyen 6 d'actionnement des volets 5. Dans ce dernier cas, le mouvement des volets 5 et celui du moyen de recouvrement 7 peuvent être réalisés de manière parfaitement précise, de sorte que l'ensemble de l'espace délimité par le dispositif conforme à l'invention peut être sécurisé sans qu'il n'existe aucune possibilité d'accès à l'intérieur de l'espace ainsi délimité.

Selon une autre caractéristique de l'invention, le moyen 6 d'actionnement des volets 5 formant le moyen escamotable 4 coopère, en outre, avec des capteurs de position et des butées d'arrêt, non représentés, avantageusement fixés dans le support de protection 9 et destinés, respectivement, à repérer la position des volets 5 lors de leur mouvement de fermeture en direction de la porte 3 et à arrêter lesdits volets dans une position prédéterminée de pivotement, dans laquelle leurs bords libres munis du joint élastiquement déformable 5"' entrent en contact. Dans une telle position, les volets 5 se rejoignent pour former un sas permettant, par exemple, à un opérateur chargé de la maintenance de s'approcher de la porte 3 sans risquer aucune menace de tiers pendant qu'il réalise l'ouverture de ladite porte 3.

Les capteurs de position et les butées d'arrêt peuvent être, respectivement, sous forme de détecteurs photo-électriques ou de micro-interrupteurs et sous forme de butées escamotables à actionnement par électro-aimant ou par vérin pneumatique ou hydraulique.

Le ou les vérins formant le moyen 6 d'actionnement des volets 5 sont avantageusement du type à déclenchement par limiteur de pression ou limiteur de courant intégré. De tels vérins comportent des capteurs de pression déclenchant leur circuit d'alimentation dès atteinte d'une pression ou d'une intensité prédéterminée. Ainsi, lorsque les volets 5 sont appliqués contre un obstacle, à savoir la paroi du véhicule de transport de fonds 2 ou le cadre dormant 5" lors d'une application devant la porte 3, ou les butées de limitation de course déterminant la position de sas pour maintenance ou encore lors d'une application contre la façade 1, les capteurs de pression ou d'intensité déclenchent l'arrêt de l'alimentation de commande. Ces capteurs de pression ou d'intensité permettent d'éviter toute détérioration des circuits de commandes ou des vérins par surpression, dans le cas d'application d'un fluide de pression, ou par surintensité, dans le cas d'une commande électrique.

La commande du moyen d'actionnement 6 est avantageusement réalisée par l'intermédiaire d'un circuit électronique codé à actionnement manuel et/ou par télécommande. Un tel circuit électronique peut comporter, de manière connue, un clavier de saisie de code numérique ou alphanumérique et/ou un émetteur-récepteur de type à infrarouge ou à ultrasons. Le clavier permet, par exemple, à un agent chargé de la maintenance de composer un code d'actionnement des volets 5 ayant pour effet de refermer ces derniers en sas autour de lui avant qu'il n'ouvre la porte 3, alors que le dispositif émetteur-récepteur permet, par l'intermédiaire d'une télécommande embarquée dans un véhicule de transport de fonds 2, de commander à partir de ce dernier, en toute sécurité, la manoeuvre des volets 5 jusqu'à leur application totale contre la paroi du véhicule.

En outre, un tel circuit électronique de commande pourra assurer le contrôle des moyens d'actionnement, en particulier en ce qui concerne le positionnement et les pressions ou intensités instantanés.

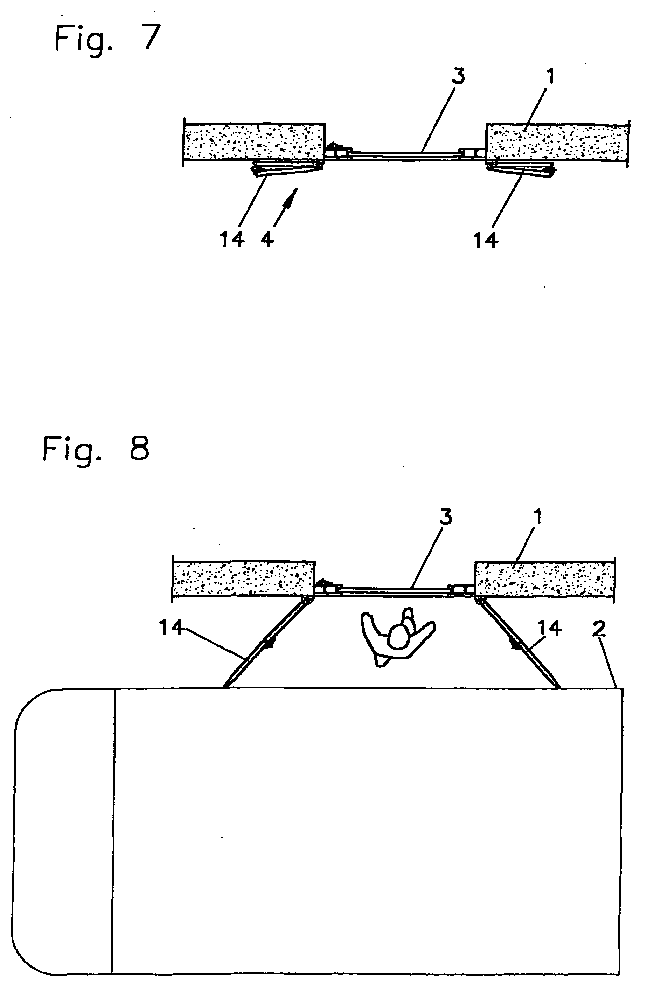

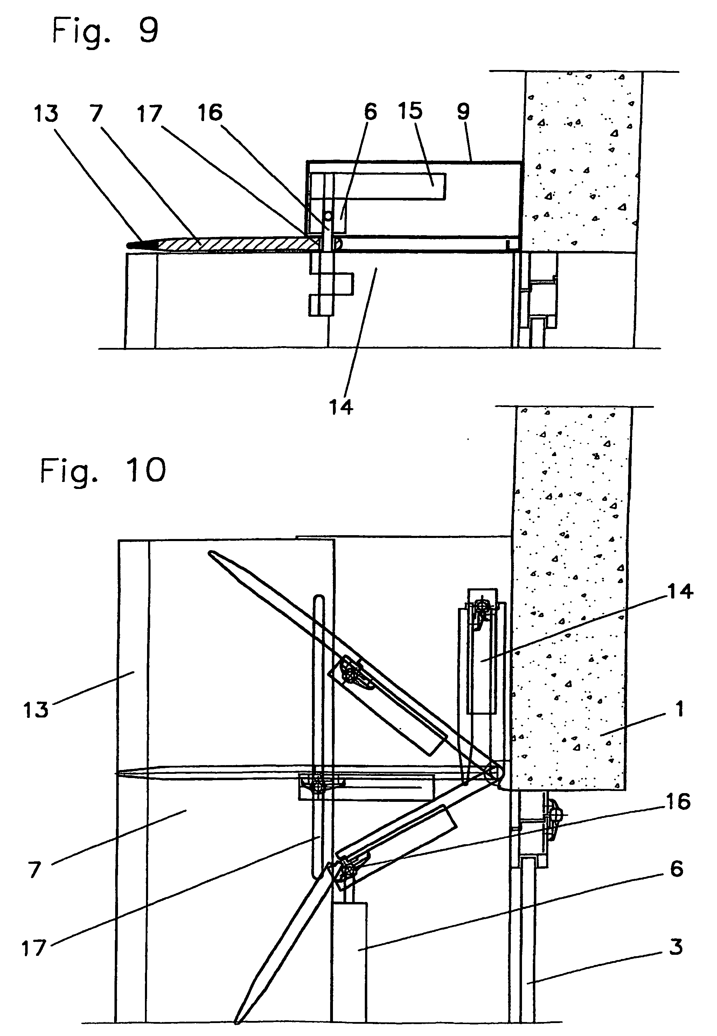

Les figures 7 et 8 représentent une variante de réalisation de l'invention, dans laquelle le moyen escamotable 4 est constitué par des volets repliables 14 dont le moyen de déploiement de la partie externe non reliée au cadre dormant est manoeuvrée par l'intermédiaire d'un moteur 15 agissant sur son axe 16 d'articulation sur la partie interne du volet, ledit axe étant actionné simultanément par le moyen 6 d'actionnement des volets sous forme d'un vérin ou analogue. Le moteur 15 est constitué, de préférence, par un vérin rotatif disposé au bout de l'axe d'articulation 16, sous le support de protection 9 (figure 9).

En outre, l'axe d'articulation 16 entre les parties internes et externes du volet, qui est actionné par le moteur 15 et par le moyen d'actionnement 6 des volets, coopère avec une rainure longitudinale 17, prévue près de la partie arrière du moyen de recouvrement 7. Ainsi, tout déplacement des volets 14 par l'intermédiaire du moyen 6 aura pour conséquence un entraînement du moyen de recouvrement 7 dû au pivotement des axes 16 autour des axes des paumelles des volets 14, reliées au cadre dormant. La figure 10 des dessins annexés représente différentes positions de repliement et de déploiement d'un volet repliable et une position du moyen de recouvrement 7 correspondant au déploiement maximal de celle-ci, le volet 14 étant alors perpendiculaire à la façade 1. Les autres positions du moyen 7 ne sont pas représentées sur cette figure pour des questions de clarté.

Selon une autre caractéristique de l'invention, non représentée aux dessins annexés, le moyen de recouvrement 7 peut être pourvu, en outre, d'un dispositif d'éclairage à allumage et à extinction automatiques commandés par les volets 5 ou 14 lorsque ces derniers quittent leur position de repos et reviennent à celle-ci. La commande correspondante peut être simplement du type interrupteur tout ou rien enclenchant l'allumage de l'éclairage lorsque le volet est manoeuvré de sa position de repos vers une position de service et déclenchant ledit allumage lorsque le volet revient à sa position de départ.

Le trappon conforme à l'invention permet de réaliser des sas provisoires par déploiement des volets entre la façade d'un immeuble 1 et un véhicule de transport de fonds 2, de sorte que le convoyeur de fonds peut évoluer dans une zone totalement protégée et de manière invisible au passant, ce sas pouvant être déployé de manière particulièrement sûre par le personnel de convoyage de fonds au cours de son approche finale du lieu de dépôt, ce au moyen d'un dispositif de télécommande.

Par ailleurs, le trappon selon l'invention peut également être utilisé comme sas d'accès pour du personnel de maintenance ou encore pour le personnel d'une agence bancaire, le déploiement des volets pouvant, là également, être réalisé par télécommande ou par l'intermédiaire d'un dispositif codé.

Enfin, par repliement des volets, après l'opération de transfert de fonds ou après utilisation du sas à titre de sécurité pour l'entrée de personnels, lesdits volets peuvent servir d'éléments de sécurité supplémentaires contre des effractions. Le trappon conforme à l'invention a été décrit pour assurer la sécurité d'un transfert à travers une porte 3 d'un immeuble 1 mais, bien entendu, il est également applicable dans le cas de l'installation d'un coffre de dépôt en façade, coffre dont la sécurité de la desserte doit être assurée de manière identique, c'est-à-dire de telle sorte que les opérations de transfert soient effectuées hors de la vue du public.

Le trappon conforme à l'invention peut être installé de manière particulièrement simple et rapide devant une porte existante sans modification du génie civil et avec un coût d'installation relativement faible.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Trappon d'accès pour transport de fonds équipant une façade (1) d'un immeuble et destiné à permettre la protection de convoyeurs de fonds pendant le transfert de valeurs entre un véhicule (2) et le local de dépôt desdites valeurs, en particulier la porte (3) d'accès à ce local, **caractérisé en ce qu'**il est essentiellement constitué par un moyen escamotable (4) s'appuyant, en position de service, contre le véhicule de transport de fonds (2) et, en position de repos, contre la façade (1) de l'immeuble renfermant le local à desservir, de part et d'autre de la porte (3) d'accès à ce local ou devant ladite porte (3).

2. Trappon, suivant la revendication 1, **caractérisé en ce que** le moyen escamotable (4) est constitué par deux volets (5) articulés sur l'encadrement de la porte (3) d'accès au local de dépôt des valeurs, du côté extérieur de celui-ci, et rabattus, en position de repos, devant la porte (3) d'accès au local de dépôt des valeurs, par un moyen d'actionnement (6) relié à articulation aux volets (5) et par un moyen (7) de recouvrement des volets (5) en toutes positions.

3. Trappon, suivant la revendication 1, **caractérisé en ce que** le moyen escamotable (4) est constitué par deux volets (5) articulés sur l'encadrement de la porte (3) d'accès au local de dépôt des valeurs, du côté extérieur de celui-ci, et rabattus, en position de repos, de part et d'autre de la porte (3), contre la façade (1).

4. Trappon, suivant l'une quelconque des revendications 2 et 3, **caractérisé en ce que** les volets (5) se présentent sous forme de deux plaques pleines pourvues, d'une part, de paumelles (5') d'articulation sur un cadre dormant (5") fixé à l'encadrement de la porte (3) d'accès au local de dépôt de valeurs et, d'autre part, du côté opposé aux paumelles (5') d'un joint élastiquement déformable (5''') d'application contre la paroi du véhicule de transport de fond (2).

5. Trappon, suivant la revendication 4, **caractérisé en ce que** les volets (5) sont, en outre, munis d'un blindage anti-effraction et pare-balles.

6. Trappon, suivant la revendication 2, **caractérisé en ce que** le moyen d'actionnement (6), relié à articulation aux volets (5), se présente sous forme d'au moins un vérin électrique, pneumatique ou hydraulique relié, respectivement par sa chape et par l'extrémité libre de sa tige de piston, avec possibilité de pivotement relatif, à des axes d'entraînement correspondants (8) solidaires de la partie supérieure de chaque plaque pleine formant les volets (5).

7. Trappon, suivant la revendication 6, **caractérisé en ce que**, dans le cas d'une réalisation du moyen d'actionnement (6) sous forme de deux vérins, ces derniers sont reliés chacun à articulation, par leur chape à la façade (1) ou au cadre dormant (5") et par leur tige de piston à l'axe d'entraînement (8) du volet (5) correspondant.

8. Trappon, suivant la revendication 2, **caractérisé en ce que** le moyen (7) de recouvrement des volets (5) en position de service est constitué par un panneau coulissant logé dans un support de protection (9) fixé à la façade (1), au-dessus de la porte (3) et renfermant le moyen d'actionnement (6) des volets (5).

9. Trappon, suivant la revendication 8, **caractérisé en ce que** le moyen de recouvrement (7) est pourvu, d'une part, sur sa face tournée vers la partie supérieure des volets (5), de cames (10) destinées à coopérer avec des axes de guidage (11) prévus auxdites extrémités supérieures des volets (5), d'autre part, à son bord arrière tourné vers la façade (1) d'un dispositif (12) de rappel en position de repos contre la façade (1) et, enfin, sur son bord avant d'un joint élastiquement déformable (13).

10. Trappon, suivant la revendication 8, **caractérisé en ce que** le support de protection (9) fixé à la façade (1) est constitué par une tôle montée en saillie au-dessus de la porte (3) et comportant des guidages latéraux de maintien du moyen de recouvrement (7) et de protection de l'espace libre entre ce dernier et la façade (1), en position de service dudit moyen de recouvrement (7).

11. Trappon, suivant la revendication 9, **caractérisé en ce que** le moyen (12) de rappel en position de repos du moyen de recouvrement (7) contre la façade (1) est constitué, soit sous la forme d'au moins un moyen élastique de rappel tel qu'un ressort ou une matière élastiquement déformable du type caoutchouc, soit sous forme d'au moins un dispositif à piston tel qu'un amortisseur ou un vérin.

12. Trappon, suivant la revendication 11, **caractérisé en ce que**, dans le cas de réalisation du moyen (12) sous la forme d'au moins un vérin, celui-ci est du type à simple effet, chargé dans le sens d'un rappel en position de repos du moyen de recouvrement (7) lors de la délivrance d'une commande de retour en position de repos des volets (5).

13. Trappon, suivant la revendication 11, **caractérisé en ce que** le moyen (12) est sous la forme d'au moins un vérin double-effet commandé en synchronisme avec le ou les vérins formant le moyen (6) d'actionnement des volets (5).

14. Trappon, suivant l'une quelconque des revendications 6 et 8, **caractérisé en ce que** le moyen (6) d'actionnement des volets (5) formant le moyen escamotable (4) coopère, en outre, avec des capteurs de position et des butées d'arrêt fixés dans le support de protection (9) et destinés, respectivement, à repérer la position des volets (5) lors de leur mouvement de fermeture en direction de la porte (3) et à arrêter lesdits volets dans une position prédéterminée de pivotement, dans laquelle leurs bords libres munis du joint élastiquement déformable (5"') entrent en contact.

15. Trappon, suivant la revendication 14, **caractérisé en ce que** les capteurs de position et les butées d'arrêt sont, respectivement, sous forme de détecteurs photo-électriques ou de micro-interrupteurs et sous forme de butées escamotables à actionnement par électro-aimant ou par vérin pneumatique ou hydraulique.

16. Trappon, suivant la revendication 6, **caractérisé en ce que** le ou les vérins formant le moyen (6) d'actionnement des volets (5) sont du type à déclenchement par limiteur de pression ou limiteur de courant intégré.

17. Trappon, suivant l'une quelconque des revendications 2, 6 à 8, 13, 14 et 16, **caractérisé en ce que** la commande du moyen d'actionnement (6) est réalisée par l'intermédiaire d'un circuit électronique codé à actionnement manuel et/ou par télécommande.

18. Trappon, suivant la revendication 1, **caractérisé en ce que** le moyen escamotable (4) est constitué par des volets repliables (14), dont le moyen de déploiement de la partie externe non reliée au cadre dormant est manoeuvrée par l'intermédiaire d'un moteur (15) agissant sur son axe (16) d'articulation sur la partie interne du volet, ledit axe étant actionné simultanément par le moyen (6) d'actionnement des volets sous forme d'un vérin ou analogue.

19. Trappon, suivant la revendication 18, **caractérisé en ce que** le moteur (15) est constitué par un vérin rotatif disposé au bout de l'axe d'articulation (16), sous le support de protection (9).

20. Trappon, suivant la revendication 19, **caractérisé en ce que** l'axe d'articulation (16) entre les parties internes et externes du volet, qui est actionné par le moteur (15) et par le moyen d'actionnement (6) des volets, coopère avec une rainure longitudinale (17), prévue près de la partie arrière du moyen de recouvrement (7).

21. Trappon, suivant l'une quelconque des revendications 2 et 8, **caractérisé en ce que** le moyen de recouvrement (7) est pourvu, en outre, d'un dispositif d'éclairage à allumage et à extinction automatiques commandés par les volets (5 ou 14) lorsque ces derniers quittent leur position de repos et reviennent à celle-ci.

## Patentansprüche

1. Mit einer Luke verschlossener Zugang zum Transport von Wertgegenständen auf der Vorderseite (1) eines Gebäudes zum Ermöglichen des Schutzes von Transporteinrichtungen für Wertgegenstände während der Übergabe der Wertgegenstände von einem Fahrzeug (2) und dem Lagerungsort der besagten Wertgegenstände, insbesondere der Zugangstür (3) zu diesem Ort, **dadurch gekennzeichnet, dass** sie im wesentlichen aus einem einklappbaren Mittel (4) besteht, das in der Betriebsstellung an dem Transportfahrzeug (2) für die Wertgegenstände und in der Ruhestellung an der Vorderseite (1) des den zu versorgenden Ort enthaltenden Gebäudes beiderseits der Zugangstür (3) zu diesem Ort oder vor dieser Tür (3) anliegt.

2. Zugang nach Anspruch 1, **dadurch gekennzeichnet, dass** das einklappbare Mittel (4) aus zwei am Rahmen der Zugangstür (3) zum Ort der Wertgegenstände auf deren Außenseite schwenkbar angelenkten Klappen (5) aufgebaut ist, welche in der Ruhestellung vor der Zugangstür (3) zum Lagerungsort der Wertgegenstände durch ein mit den Klappen (5) schwenkbar verbundenes Betätigungsmittel (6) zusammengeklappt werden und mit einem Verkleidungsmittel (7) für die Klappe (5) in allen Stellungen versehen sind.

3. Zugang nach Anspruch 1, **dadurch gekennzeichnet, dass** das einklappbare Mittel (4) aus zwei am Rahmen der Zugangstür (3) zum Lagerungsort der Wertgegenstände auf deren Außenseite schwenkbar angelenkten Klappen (5) aufgebaut ist, welche in der Ruhestellung beiderseits der Zugangstür (3) an der Gebäudevorderseite (1) zusammengeklappt werden.

4. Zugang nach einem der Ansprüche 2 oder 3, **dadurch gekennzeichnet, dass** die Klappen (5) in der Form von zwei Vollplatten ausgebildet sind, die einerseits mit Scharnierbändern (5') auf einer am Rahmen der Zugangstür (3) zum Lagerungsort der Wertgegenstände befestigten Türzarge (5'') und andererseits auf der zu den Bändern (5') entgegengesetzten Seite mit einer elastisch verformbaren Leiste (5''') zur Anlage an der Wand des Transportfahrzeugs (2) für Wertgegenstände versehen sind.

5. Zugang nach Anspruch 4, **dadurch gekennzeichnet, dass** die Klappen (5) weiterhin mit einer einbruchssicheren und kugelfesten Panzerung ausgerüstet sind.

6. Zugang nach Anspruch 2, **dadurch gekennzeichnet, dass** das mit den Klappen (5) schwenkbar verbundene Betätigungsmittel (6) in der Form wenigstens eines elektrischen, pneumatischen oder hydraulischen Zylinders ausgebildet ist, der mit seinem Kopf bzw. dem freien Ende seiner Kolbenstange mit der Möglichkeit einer relativen Verschwenkung an entsprechenden, fest mit dem Oberteil jeder die Klappen (5) bildenden Vollplatte verbundenen Antriebsachsen (8) befestigt ist.

7. Zugang nach Anspruch 6, **dadurch gekennzeichnet, dass** im Fall der Realisierung des Betätigungsmittels (6) durch zwei Zylinder die letzteren über ihren Kopf mit der Gebäudevorderseite (1) oder der Türzarge (5'') und über ihre Kolbenstange mit der Antriebsachse (8) der entsprechenden Klappe (5) schwenkbar verbunden sind.

8. Zugang nach Anspruch 2, **dadurch gekennzeichnet, dass** das Verkleidungsmittel (7) für die Klappen (5) in der Betriebsstellung aus einer in einer auf der Gebäudevorderseite (1) oberhalb der Tür (3) befestigten und das Betätigungsmittel (6) für die Klappen (5) umgebenden Schutzhalterung (9) untergebrachten, verschiebbaren Platte besteht.

9. Zugang nach Anspruch 8, **dadurch gekennzeichnet, dass** das Verkleidungsmittel (7) einerseits auf seiner zum Oberteil der Klappen (5) gerichteten Seite mit Kurven (10), die zum Zusammenwirken mit an den besagten oberen Enden der Klappen (5) vorgesehenen Führungsachsen (11), andererseits an seinem hinteren, zur Gebäudevorderseite (1) weisenden Rand mit einer Vorrichtung zur Rückstellung (12) in die Ruhestellung an der Gebäudevorderseite (1) und schließlich an seinem vorderen Rand mit einer elastisch verformbaren Leiste (13) versehen ist.

10. Zugang nach Anspruch 8, **dadurch gekennzeichnet, dass** die an der Gebäudevorderseite (1) befestigte Schutzhalterung (9) aus einem oberhalb der Tür (3) vorstehenden Blech besteht, welches seitliche Führungen zum Halten des Verkleidungsmittels (7) und zum Schützen des freien Raums zwischen dem letzteren und der Gebäudevorderseite (1) in der Betriebsstellung des besagten Verkleidungsmittels (7) aufweist.

11. Zugang nach Anspruch 9, **dadurch gekennzeichnet, dass** die Vorrichtung zur Rückstellung (12) in die Ruhestellung des Verkleidungsmittels (7) an der Gebäudevorderseite (1) entweder in Form wenigstens eines elastischen Rückstellmittels wie beispielsweise einer Feder oder eines elastisch verformbaren, gummiartigen Materials oder in Form einer Kolbeneinrichtung wie beispielsweise einem Stoßdämpfer oder einem Zylinder ausgebildet ist.

12. Zugang nach Anspruch 11, **dadurch gekennzeichnet, dass** im Fall der Realisierung des Mittels (12) in Form wenigstens eines Zylinders dieser vom einfachwirkenden Typ ist, belastet in Rückstellrichtung in die Ruhestellung des Verkleidungsmittels (7) bei Erteilung eines Befehls zur Rückstellung in die Ruhestellung der Klappen (5).

13. Zugang nach Anspruch 11, **dadurch gekennzeichnet, dass** das Mittel (12) in Form wenigstens eines Zylinders vom doppeltwirkenden Typ ausgebildet ist, synchron gesteuert mit dem Zylinder oder den Zylindern, der oder die das Betätigungsmittel (6) für die Klappen (5) bildet/bilden.

14. Zugang nach einem der Ansprüche 6 und 8, **dadurch gekennzeichnet, dass** das Betätigungsmittel (6) für die das einklappbare Mittel (4) bildenden Klappen (5) weiterhin mit Positionssensoren und auf der Schutzhalterung (9) angebrachten Anschlägen zusammenwirkt, die zur Anzeige der stellung der Klappen (5) bei ihrer Schließbewegung in Richtung zur Tür (3) bzw. zum Anhalten der besagten Klappen in einer vorgegebenen Verschwenkstellung vorgesehen sind, in der ihre freien, mit der elastisch verformbaren Leiste (5''') versehenen Ränder in Kontakt kommen.

15. Zugang nach Anspruch 14, **dadurch gekennzeichnet, dass** die Positionssensoren und die Anschläge in Form von photoelektrischen Empfängern oder Mikroschaltern bzw. in Form von einziehbaren Anschlägen mit Betätigung durch einen Elektromagneten oder durch einen pneumatischen oder hydraulischen Zylinder ausgebildet sind.

16. Zugang nach Anspruch 6, **dadurch gekennzeichnet, dass** die das Betätigungsmittel (6) für die Klappen (5) bildenden Zylinder vom Typ sind, der durch einen eingebauten Druckbegrenzer oder Strombegrenzer auslöst.

17. Zugang nach einem der Ansprüche 2, 6 bis 8, 13, 14 und 16, **dadurch gekennzeichnet, dass** die Steuerung des Betätigungsmittels (6) über einen codierten elektronischen Schaltkreis mit manueller und/oder Fernbedienung realisiert wird.

18. Zugang nach Anspruch 1, **dadurch gekennzeichnet, dass** das einklappbare Mittel (4) aus faltbaren Klappen (14) besteht, deren Ausklappmittel für den äußeren, nicht mit der Türzarge verbundenen Teil über einen auf seine Schwenkachse (16) wirkenden Motor (15) auf dem Innenteil der Klappe betrieben wird, wobei die besagte Achse gleichzeitig durch das Betätigungsmittel (6) für die Klappen in Form eines Zylinders oder dergleichen betätigt wird.

19. Zugang nach Anspruch 18, **dadurch gekennzeichnet, dass** der Motor (15) aus einem am Ende der Schwenkachse (16) unter der Schutzhalterung (9) angeordneten Drehzylinder besteht.

20. Zugang nach Anspruch 19, **dadurch gekennzeichnet, dass** die Schwenkachse (16) zwischen den Innen- und Außenteilen der Klappe, die vom Motor (15) und vom Betätigungsmittel (6) für die Klappen betätigt wird, mit einer nahe dem Hinterteil des Verkleidungsmittels (7) vorgesehenen Längsnut (17) zusammenwirkt.

21. Zugang nach einem der Ansprüche 2 und 8, **dadurch gekennzeichnet, dass** das Verkleidungsmittel (7) weiterhin mit einer Beleuchtungsvorrichtung mit automatischem, durch die Klappen (5 oder 14) gesteuertem Aufleuchten oder Erlöschen versehen ist, wenn die letzteren ihre Ruhestellung verlassen oder in diese zurückkehren.

## Claims

1. Access trap door for transporting funds, provided on a facade (1) of a building and intended to protect funds delivery men during the transfer of valuables between a vehicle (2) and the premises for depositing said valuables, in particular the access door (3) to these premises, **characterised in that** the trap door substantially consists of a retractable means (4) pressed, in the service position, against the funds transport vehicle (2) and, in the rest position, against the facade (1) of the building enclosing the premises to be served, on either side of the access door to these premises or in front of said door (3).

2. Trap door according to claim 1, **characterised in that** the retractable means (4) consists of two flaps (5) linked to the frame of the access door (3) to the premises for depositing valuables, from the outside of said premises, said flaps being closed in the rest position in front of the access door (3) to the premises for depositing valuables by an actuating means (6) hinged to the flaps (5) and by a means (7) for covering the flaps (5) in all positions.

3. Trap door according to claim 1, **characterised in that** the retractable means (4) consists of two flaps (5) linked to the frame of the access door (3) to the premises for depositing valuables, from the outside of said premises, said flaps being closed, in the rest position, on either side of the door (3), against the facade (1).

4. Trap door according to any one of claims 2 and 3, **characterised in that** the flaps (5) are in the form of two solid panels provided, on the one hand, with hinges (5') for linking to a fixed frame (5") attached to the frame of the access door (3) to the premises for depositing valuables and, on the other hand, on the side remote from the hinges (5'), with a resiliently deformable seal (5"') for application against the wall of the vehicle for transporting funds (2).

5. Trap door according to claim 4, **characterised in that** the flaps (5) are also provided with anti-break-in and bullet-proof armour plating.

6. Trap door according to claim 2, **characterised in that** the actuating means (6) hinged to the flaps (5) is the form of at least one electric, pneumatic or hydraulic jack connected respectively by its shell and by the free end of its piston rod, with the possibility of relative pivoting, to the corresponding drive shafts (8) which are integral with the upper portion of each solid panel forming the flaps (5).

7. Trap door according to claim 6, **characterised in that** in the case of an actuating means (6) being constructed in the form of two jacks, said jacks are hinged by their shell to the facade (1) or to the fixed frame (5") and by their piston rod to the drive shaft (8) of the corresponding flap (5).

8. Trap door according to claim 2, **characterised in that** the means (7) for covering the flaps (5) in the service position consists of a sliding panel housed in a protective support (9) attached to the facade (1), above the door (3) and enclosing the actuating means (6) for the flaps (5).

9. Trap door according to claim 8, **characterised in that** the covering means (7) is provided, firstly, on its face turned toward the upper portion of the flaps (5), with cams (10) that are intended to cooperate with guide pins (11) provided at said upper ends of the flaps (5), secondly, on its back edge turned toward the facade (1), with a device (12) for returning to the rest position against the facade (1) and, finally, on its front edge, with a resiliently deformable seal (13).

10. Trap door according to claim 8, **characterised in that** the protective support (9) attached to the facade (1) consists of a sheet mounted so as to protrude above the door (3) and comprising lateral guides for holding the covering and protective means (7) for the free space between said means and the facade (1) in the service position of said covering means (7).

11. Trap door according to claim 9, **characterised in that** the means (12) for return to the rest position of the covering means (7) against the facade (1) is constructed either in the form of at least one resilient return means such as a spring or a resiliently deformable material of the rubber type, or in the form of at least one piston device such as a damper or a jack.

12. Trap door according to claim 11, **characterised in that**, in the case of the means (12) being constructed in the form of at least one jack, said jack is of the single-action type loaded in the direction of a return to the rest position of the covering means (7) when a command to return to the rest position of the flaps (5) is delivered.

13. Trap door according to claim 11, **characterised in that** the means (12) is in the form of at least one double action jack controlled in synchronisation with the jack or jacks forming the actuating means (6) for the flaps (5).

14. Trap door according to any one of claims 6 and 8, **characterised in that** the actuating means (6) for the flaps (5) forming the retractable means (4) also cooperates with position sensors and end stops attached in the protective support (9), and intended, respectively, to locate the position of the flaps (5) during their movement of closure toward the door (3) and to stop said flaps in a predetermined pivoting position in which their free edges provided with the resiliently deformable seal (5''') come into contact.

15. Trap door according to claim 14, **characterised in that** the position sensors and the end stops are respectively in the form of photoelectric detectors or microswitches and in the form of retractable stops actuated by electromagnets or by a pneumatic or hydraulic jack.

16. Trap door according to claim 6, **characterised in that** the jacks forming the actuating means (6) for the flaps (5) are of the type that are actuated by a pressure limiting device or a current limiter.

17. Trap door according to any one of claims 2, 6 to 8, 13, 14 and 16, **characterised in that** the control means (6) is controlled by a coded electronic circuit which is actuated manually and/or remotely.

18. Trap door according to claim 1, **characterised in that** the retractable means (4) consists of foldable flaps (14), of which the means for deploying the outer portion, which is not connected to the fixed frame, is operated by means of a motor (15) acting on its axis (16) of articulation to the inner portion of the flap, said axis being actuated simultaneously by the actuating means (6) for the flaps in the form of a jack or the like.

19. Trap door according to claim 18, **characterised in that** the motor (15) consists of a rotating jack arranged at the end of the axis of articulation (16), under the protective support (9).

20. Trap door according to claim 19, **characterised in that** the axis of articulation (16) between the inner and outer portions of the flap, which is actuated by the motor (15) and by the actuating means (6) for the flaps, cooperates with a longitudinal groove (17), provided near the rear portion of the covering means (7).

21. Trap door according to any one of claims 2 and 8, **characterised in that** the covering means (7) is also provided with a lighting means that can be switched on or off automatically and is controlled by the flaps (5 or 14) when said flaps leave their rest positions and return thereto.
